# EUROPÄISCHE PATENTANMELDUNG

(11) **EP 1 097 964 A1**
(43) Veröffentlichungstag der Anmeldung: **09.05.2001**
(21) Anmeldenummer: 00120967.5
(22) Anmeldetag: 27.09.2000
(51) Int. Cl.: C08K 3/36, C08L 67/00, C08L 67/02, D01F 6/62, D01F 1/10

(54) **Polyester**

(30) Priorität: 04.11.1999 DE 19953029
(71) Anmelder: Degussa-Hüls Aktiengesellschaft, 60287 Frankfurt am Main (DE); Nippon Aerosil Co., Ltd., Shinjuku-ku, Tokyo 163-09 (JP)
(72) Erfinder: Mangold, Helmut, Dr., 63517 Rodenbach (DE); Kerner, Dieter, Dr., 63450 Hanau (DE); Ochiai, Mitsuru, Hasuda City, 349-01 Saitama (JP); Zen, Hideki, Kawasaki City, 213-00 Kanagawa (JP)

(57) **Zusammenfassung**

Polyester werden auf bekanntem Wege hergestellt, wobei ein Glykol mit einer organischen Säure verestert wird, und das Glykol ein mittels Aerosol dotiertes pyrogen hergestelltes Siliciumdioxid enthält.

Der Polyester kann zur Herstellung von Fasern verwendet werden.

## Beschreibung

Die Erfindung betrift Polyester, ein Verfahren zu ihrer Herstellung sowie ihre Verwendung.

Polyester sind bekannte Verbindungen, die u.a. zur Herstellung von Textilien verwendet werden.

Sie werden beschrieben in Ullmann's Encyclopedia of Industrial Chemistry Vol A 21 (1992) Seiten 227 bis 251.

Die Herstellung von Polyesterfasern ist bekannt aus Ullmann's Encyclopedia of Industrial ChemistryVol A 10 (1992) Seiten 579 bis 613.

Bei der Herstellung von Polyester beziehungsweise Polyesterfaser wird als Alkohol u.a. ein Glykol eingesetzt.

Diesem Glykol wird ein Füllstoff zugesetzt, um bestimmte physiko-chemische Eigenschaften des Polymers einzustellen.

Gegenstand der Erfindung sind Polyester, welche dadurch gekennzeichnet sind, daß sie ein mittels Aerosol dotiertes Siliciumdioxid enthalten.

Als mittels Aerosol dotiertes pyrogen hergestelltes Siliciumdioxid kann ein mittels Aerosol mit Aluminiumoxid dotiertes Siliciumdioxid eingesetzt werden, wie es in der Patentanmeldung DE 19847161.0-41 beschrieben wird.

Das mittels Aerosol mit Aluminiumoxid dotierte pyrogen hergestellte Siliciumdioxid, ist dadurch gekennzeichnet, daß die Basiskomponente eine pyrogen nach Art der Flammenoxidation oder bevorzugt, der Flammenhydrolyse, hergestellte Kieselsäure ist, die mit einer Dotierungskomponente von 1·10⁻⁴ und bis 20 Gew.% dotiert ist, wobei die Dotierungsmenge vorzugsweise im Bereich von 1 bis 10.000 ppm liegt und die Dotierungskomponente ein Salz oder eine Salzmischung des Aluminiums oder eine Suspension einer Aluminiumverbindung oder metallischen Aluminiums oder Mischungen davon ist, wobei die BET-Oberfläche des dotierten Oxides zwischen 5 und 600 m²/g, bevorzugt im Bereich zwischen 40 und 100 m²/g, liegt.

Die dotierte Kieselsäure kann eine DBP-Zahl von unter 100g/100g aufweisen.

Das mittels Aerosol mit Aluminiumoxid dotierte pyrogen hergestellte Siliciumdioxid, kann man herstellen indem man in eine Flamme, wie sie zur pyrogenen Herstellung von Kieselsäure nach der Art der Flammenoxidation oder bevorzugt der Flammenhydrolyse benutzt wird, ein Aerosol einspeist, das Aerosol vor der Reaktion mit dem Gasgemisch der Flammenoxidation beziehungsweise Flammenhydrolyse homogen mischt, dann das Aerosol-Gasgemisch in der Flamme abreagieren läßt und die entstandenen mit Aluminiumoxid dotierten pyrogen hergestellten Kieselsäuren in bekannter Weise vom Gasstrom abtrennt, wobei zur Herstellung des Aerosols eine wäßrige Lösung dient, die Salze oder Salzmischungen des Aluminiums oder das Metall selbst in gelöster oder suspendierter Form oder Mischungen davon enthält, wobei das Aerosol durch Vernebelung mittels einer Zweistoffdüse oder durch eine andere Art der Aerosolherstellung, vorzugsweise durch einen Aerosolgenerator nach der Ultraschallvernebelung, hergestellt wird.

Als Salze können eingesetzt werden: AlCl₃, Al₂(SO₄)₃, Al(NO₃)₃.

Die Verfahren der Flammenhydrolyse zur Herstellung von pyrogenen Oxiden so auch zur Herstellung von Siliciumdioxid (Kieselsäure) sind aus Ullmanns Enzyklopädie der technischen Chemie, 4. Auflage, Band 21, Seite 464 bekannt.

Erfindungsgemäß können Abmischungen von 0,1 bis 100 Prozent der erfindungsgemäß einsetzbaren Kieselsäuren mit anderen pyrogen hergestellten oder gefällten Kieselsäuren oder Bentoniten oder anderen in der bei der Herstellung von Polyestern üblichen Füllstoffen oder Mischungen dieser Füllstoffe eingesetzt werden.

Die erfindungsgemäße einsetzbare Kieselsäure, die beispielsweise bei Verwendung von in Wasser gelösten Aluminiumchloridsalzen für die Herstellung des einzuspeisenden Aerosols als Produkt erhalten wird, läßt sich extrem gut in polaren Medien, wie z. B. Wasser, dispergieren.

Der erfindungsgemäße Polyester eignet sich zur Herstellung von Fasern (Polyesterfasern).

Ein weiterer Gegenstand der Erfindung ist ein Verfahren zur Herstellung von Polyestern, wobei Glykol, vorzugsweise Ethylenglykol mit einer organischen Säure auf bekanntem Wege verestert, welches dadurch gekennzeichnet ist, daß man dem Glykol ein mittels Aerosol dotiertes pyrogen hergestelltes Siliciumdioxid zusetzt.

Ein weiterer Gegenstand der Erfindung ist ein Glykol, vorzugsweise Ethylenglykol, welches dadurch gekennzeichnet ist, daß es ein mittels Aerosil dotiertes pyrogen hergestelltes Siliciumdioxid, gegebenenfalls bis max. 60 Teile pro Teil Glykol enthält.

In einer bevorzugten Ausführungsform der Erfindung kann das Glykol das mittels Aerosol dotierte pyrogen hergestellte Siliciumdioxid in einer Konzentration von 50 bis 60 Teile pro Teil Glykol enthalten.

Die Herstellung des Polyester kann auf bekanntem Wege, wie sie in Ullmann's Encyclopedia of Industrial Chemistry, Vol. A21 (1992) Seiten 227 bis 251 beschrieben wird, erfolgen.

Die Herstellung der Polyesterfaser kann auf bekanntem Wege, wie in Ullmann's Encyclopedia of Industrial ChemistryVol. A 10 (1992) Seiten 579 bis 613 beschrieben, erfolgen.

Erfindungsgemäß kann das mittels Aerosol mit Aluminiumoxid dotierte Siliciumdioxid in den Polyesterfaser, die einen Durchmesser von 10 µm Durchmesser aufweisen können, eine mittlere Teilchengröße von 0,5 µm aufweisen.

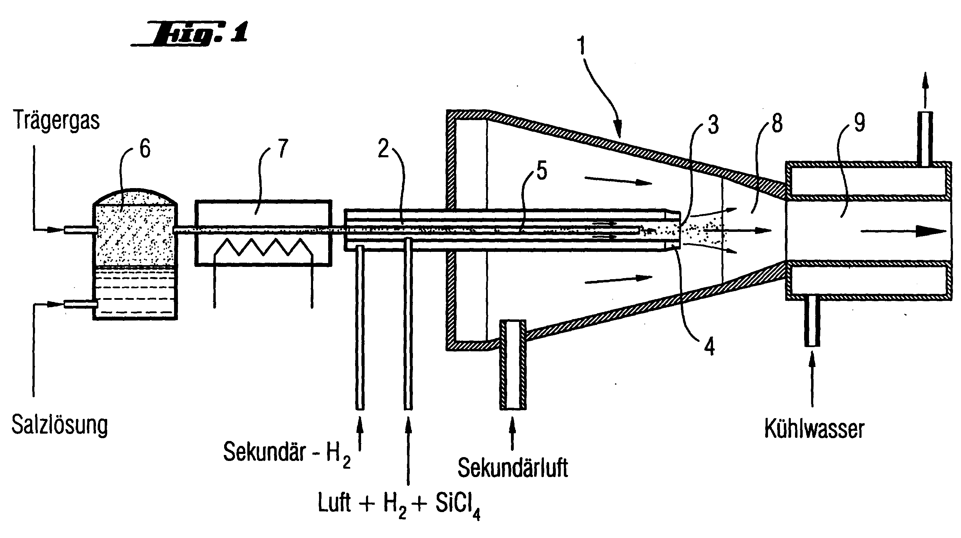

Das erfindungsgemäße einsetzbare Siliciumdioxid und das Verfahren zu seiner Herstellung sowie seine Verwendung werden anhand der Figur 1 und der folgenden Beispiele näher erläutert und beschrieben:
Figur 1 zeigt eine schematische Darstellung der Dotierungsapparatur. Kernstück der Apparatur ist ein Brenner bekannter Bauart zur Herstellung von pyrogenen Oxiden.

Der Brenner 1 besteht aus dem Zentralrohr 2 , das in die Düse 3 mündet, aus welcher der Hauptgasstrom in den Brennerraum strömt und dort abbrennt. Die Düse 3 ist von der Ringdüse 4 umgeben, aus der (Ring oder Sekundär-) Wasserstoff ausströmt.

In dem Zentralrohr 2 befindet sich das Axialrohr 5, das einige Zentimeter vor der Düse des Zentralrohrs 2 endet. In das Axialrohr 5 wird das Aerosol eingespeist.

Das Aerosol, das aus einer wäßrigen Aluminiumchloridlösung besteht, wird in dem Aerosol-Generator 6 (Ultraschallvernebler) erzeugt.

Das in dem Aerosol-Generator 6 erzeugte Aluminiumchlorid-Wasser-Aerosol wird mittels eines leichten Traggasstromes durch die Heizzone 7 geleitet, in der das mitgeführte Wasser verdampft, wobei in der Gasphase kleine Salzkristalle in feinverteilter Form zurückbleiben.

### Beispiel 1

### Herstellung einer mittels Aerosol mit Aluminiumoxid dotierten pyrogen hergestellten Kieselsäure mit niedriger BET-Oberfläche

5,25 kg/h SiCl₄ werden bei ca. 130 °C verdampft und in das Zentralrohr 2 des Brenners 1 überführt. In das Zentralrohr 2 werden zusätzlich 3,47 Nm³/h (Primär-) Wasserstoff und 3,76 Nm³/h Luft eingespeist. Zusätzlich werden in dieses Gemisch 0,95 Nm³/h Sauerstoff zugegeben.

Das Gasgemisch strömt aus der Düse 3 des Brenners 1 und brennt in den Brennerraum und das daran anschließende wassergekühlte Flammrohr.

In die Ringdüse 4 werden 0,5 Nm³/h (Mantel oder Sekundär-) Wasserstoff sowie 0,3 Nm³/h Stickstoff eingespeist.

In den Brennerraum werden noch zusätzlich 20 Nm³/h (Sekundär-)Luft eingespeist.

Aus dem Axialrohr 5 strömt der zweite Gasstrom in das Zentralrohr 2.

Der zweite Gasstrom besteht aus dem Aerosol, das durch Ultraschallvernebelung von AlCl₃-Lösung in dem Aerosolgenerator 6 erzeugt wird. Der Aerosolgenerator 6 vernebelt dabei 460 g/h 2,29-prozentige wäßrige Aluminiumtrichloridlösung. Das Aluminiumchloridaerosol wird mit Hilfe des Traggases von 0,5 Nm³/h Luft durch die geheizte Leitung geführt, wobei das wäßrige Aerosol bei Temperaturen um ca. 180 °C in ein Gas und ein Salzkristall-Aerosol übergeht.

Am Brennermund beträgt die Temperatur des Gasgemisches (SiCl₄-Luft-Wasserstoff, Wasser-Aerosol) 156 °C.

Die Reaktionsgase und die mittels Aerosol mit Aluminiumoxid dotierte pyrogene Kieselsäure werden durch Anlegen eines Unterdruckes durch das Kühlsystem gesaugt. Dabei wird der Partikel-Gasstrom auf ca. 100 bis 160 °C abgekühlt. In einem Zyklon wird der Feststoff von dem Abgasstrom abgetrennt.

Die mittels Aerosol mit Aluminiumoxid dotierte pyrogen hergestellte Kieselsäure fällt als weißes feinteiliges Pulver an.

In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der mit Aluminiumoxid dotierten pyrogenen Kieselsäure beträgt 55 m²/g.

Die Herstellbedingungen sind in Tabelle 1 zusammengefaßt. Weitere analytische Daten der erfindungsgemäßen Kieselsäure werden in Tabelle 2 angegeben.

### Beispiel 2

### Herstellung einer mittels Aerosol mit Aluminiumoxid dotierten pyrogen hergestellten Kieselsäure mit hoher BET-Oberfläche

4,44 kg/h SiCl₄ werden bei ca. 130 °C verdampft und in das Zentralrohr 2 des Brenners 1 bekannter Bauart überführt. In das Zentralrohr 2 werden zusätzlich 3,15 Nm³/h (Primär-) Wasserstoff und 8,2 Nm³/h Luft eingespeist.

Das Gasgemisch strömt aus der Düse 3 des Brenners 1 und brennt in den Brennerraum und das daran anschließende wassergekühlte Flammrohr.

In die Ringdüse 4 werden 0,5 Nm³/h (Mantel oder Sekundär-) Wasserstoff und 0,3 Nm³/h Stickstoff eingespeist.

In den Brennerraum werden noch zusätzlich 12 Nm³/h (Sekundär-)Luft eingespeist.

Aus dem Axialrohr 5 strömt der zweite Gasstrom in das Zentralrohr 2.

Der zweite Gasstrom besteht aus dem Aerosol, das durch Ultraschallvernebelung von AlCl₃-Lösung in der separaten Vernebelungseinheit 6 erzeugt wird. Der Aerosolgenerator 6 vernebelt dabei 450 g/h 2,29-prozentige wäßrige Aluminiumtrichloridlösung. Das Aluminiumchloridaerosol wird mit Hilfe des Traggases von 0,5 Nm³/h Luft durch die geheizte Leitung geführt, wobei das wäßrige Aerosol bei Temperaturen um ca. 180 °C in ein Gas und ein Salzkristall-Aerosol übergeht.

Am Brennermund beträgt die Temperatur des Gasgemisches (SiCl₄-Luft-Wasserstoff, Wasser-Aerosol) 180 °C.

Die Reaktionsgase und die mittels Aerosol mit Aluminiumoxid dotierte pyrogen hergestellte Kieselsäure werden durch Anlegen eines Unterdruckes durch ein Kühlsystem gesaugt. Dabei wird der Partikel-Gasstrom auf ca. 100 bis 160 °C abgekühlt. In einem Zyklon wird der Feststoff von dem Abgasstrom abgetrennt.

Die mittels Aerosol mit Aluminiumoxid dotierte pyrogen hergestellte Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der mittels Aerosol mit Aluminiumoxid dotierten pyrogenen Kieselsäure beträgt 203 m²/g.

Die Herstellbedingungen sind in Tabelle 1 aufgeführt. Weitere analytische Daten der erfindungsgemäß einsetzbaren Kieselsäure werden in Tabelle 2 angegeben.

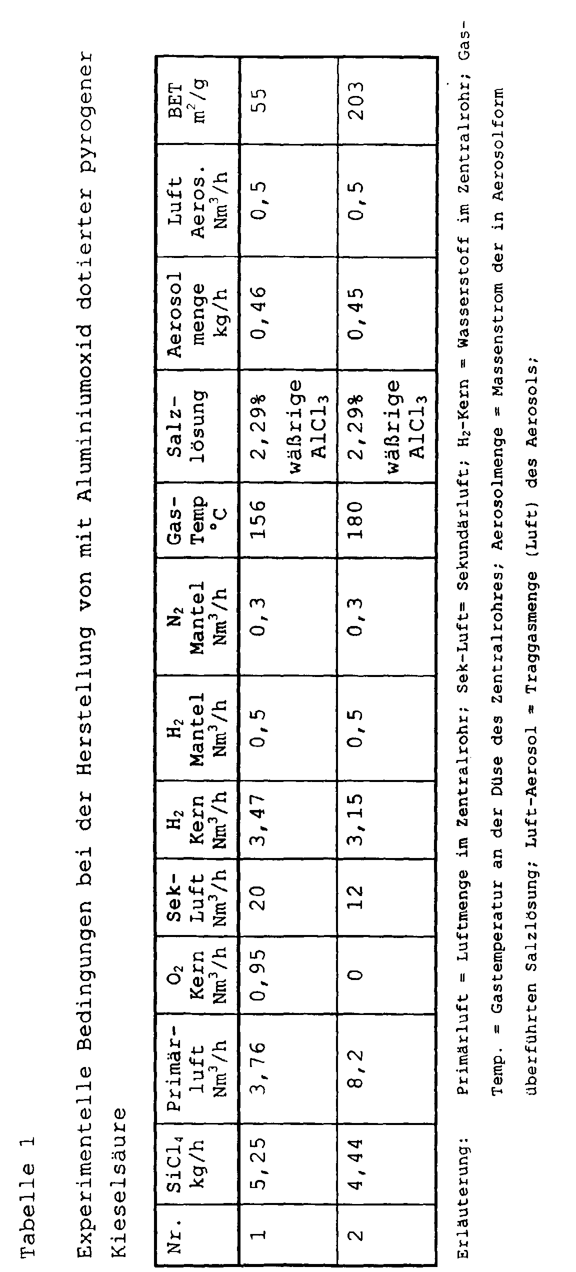

**Tabelle 2**

| Analytische Daten der nach Beispiel 1 bis 2 erhaltenen Proben | | | | | | | | | |
|---|---|---|---|---|---|---|---|---|---|
| | BET m²/g | pH-Wert 4-%Sus | Stampfdichte g/l | DBP-Absorption g/100g | Al₂O₃-Gehalt Gew.% | SiO₂-Gehalt Gew.% | Cloridgehalt ppm | | |
| Beispiel Nr. 1 | 55 | 4,39 | 94 | 81 | 0,187 | 99,79 | 89 | | |
| Beispiel Nr. 2 | 203 | 4,15 | 24 | 326 | 0,27 | 99,67 | | | |

| Dazu im Vergleich | | | | | | | | | |
|---|---|---|---|---|---|---|---|---|---|
| Aerosil OX 50 | 50 | 3,8 bis 4,8 | 130 | ca. 160 | <0,08 | >99,8 | <250 | | |
| Erläuterung: pH 4% Sus. = pH-Wert der vierprozentigen wäßrigen Suspension | | | | | | | | | |

### EM-Aufnahme:

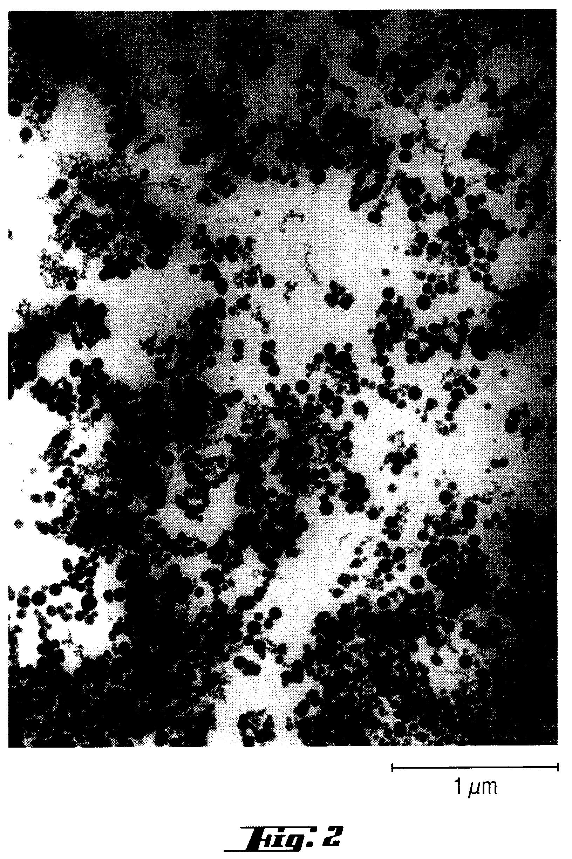

Figur 2 zeigt eine EM-Aufnahme der mittels Aerosol mit Aluminiumoxid dotierten pyrogenen Kieselsäure gemäß Beispiel 1.

Auffällig ist, daß viele einzelne sphärische Primärpartikel, die nicht miteinander verwachsen sind, vorliegen.

Der Unterschied der erfindungsgemäß einsetzbaren mittels Aerosol mit Aluminiumoxid dotierten pyrogenen Kieselsäuren zu pyrogenen Kieselsäuren bekannter Herstellung und gleicher spezifischer Oberfläche zeigt sich insbesondere in der DBP-Absorption, die ein Maß für die Strukturierung der pyrogenen Kieselsäure (d.h. für deren Verwachsungsgrad) darstellt.

So weist die nach dem pyrogenen Hochtemperaturflammenhydrolyseverfahren hergestellte kommerziell erhältliche Kieselsäure OX 50 (bei einer BET-Oberfläche von 50 m²/g) eine DBP-Absorption von ca. 160 (g/100g) auf, während die erfindungsgemäß einsetzbare mit 0,187 Gew.% Al₂O₃-dotierte pyrogene Kieselsäure nur eine DBP-Absorption von 81 (g/100g) hat. Die sehr niedrige DBP-Absorption hat zur Folge, daß sich aus der mit Aluminiumoxid dotierten pyrogenen Kieselsäure Dispersionen niedriger Viskosität herstellen lassen. Dispersionen mit einem hohen Füllgrad an Feststoff sind aufgrund dieser Eigenschaften einfach herzustellen.

Grundsätzlich sind auch Abmischungen der erfindungsgemäß einsetzbaren Kieselsäuren mit anderen pyrogen hergestellten oder gefällten Kieselsäuren oder Bentoniten oder anderen zur Herstellung von Polyestern üblichen Füllstoffen möglich.

### Beispiel 3

### Dispersion der Kieselsäure in Ethylenglykol

Ethylenglykol, das ein Ausgangsmaterial für die Herstellung von Polyesterfasern ist, wird mit mittels Aerosol mit Aluminiumoxid dotiertem Siliciumdioxid vermischt.

Im Vergleich zu Aerosil OX50, Aerosil 50, MOX 80, Al₂O₃ C ist die Dispergierbarkeit deutlich besser.

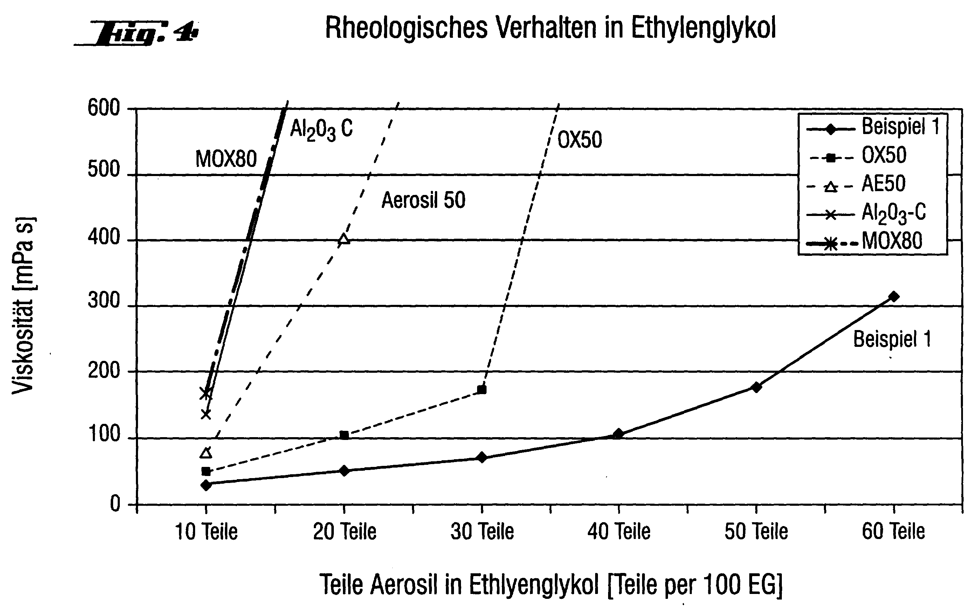

So kann gemäß Erfindung eine Konzentration von bis zu 60 Teilen pro 100 Teilen Ethylenglykol bei nur geringer Erhöhung der Viskosität erzielt werden. (Figur 4)

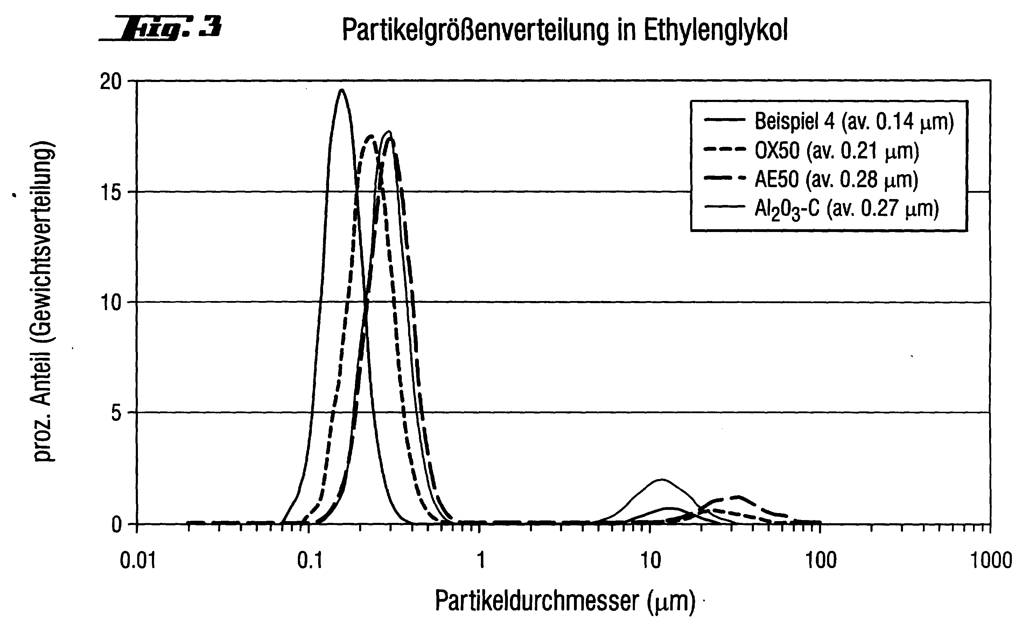

Die in Ethylenglykol ermittelten Viskositätswerte werden in der Figur 4 graphisch dargestellt. Es zeigen Figur 3 die Teilchengrößenverteilung der verschiedenen pyrogenen Oxide, dispergiert in Ethylenglykol bei einer Konzentration von 20 Teilen pro 100 Teilen Ethylenglykol und Figur 4 die verschiedenen Viskositäten in Abhängigkeit von der Konzentration.

Gemäß Figur 3 zeigt die erfindungsgemäß eingesetzte, mittels Aerosol mit Aluminiumoxid dotierte Kieselsäure (Beispiel 1) die geringste mittlere Teilchengröße von 0,14 µm.

Gemäß Figur 4 zeigt die erfindungsgemäß eingesetzte, mittels Aerosol mit Aluminiumoxid dotierte Kieselsäure (Beispiel 1) den geringsten Viskositätsanstieg.

## Patentansprüche

1. Polyester, **dadurch gekennzeichnet**, daß sie ein mittels Aerosol dotiertes pyrogen hergestelltes Siliciumdioxid enthalten.

2. Polyester gemäß Anspruch 1, **dadurch gekennzeichnet**, daß sie als Faser ausgebildet sind.

3. Verfahren zur Herstellung von Polyestern gemäß Ansprüche 1 oder 2, wobei man ein Glyol mit einer organischen Säure auf bekanntem Wege verestert, **dadurch**
**gekennzeichnet**, daß man dem Glykol ein mittels Aerosol dotiertes pyrogen hergestelltes Siliciumdioxid zusetzt.

4. Glykol, **dadurch gekennzeichnet**, daß es ein mittels Aerosol dotiertes pyrogen hergestelltes Siliciumdioxid enthält.

5. Verwendung des Polyesters gemäß Anspruch 1 zur Herstellung von Polyesterfasern.
